# EUROPEAN PATENT APPLICATION

(11) **EP 3 839 223 A1**
(43) Date of publication of application: **23.06.2021**
(21) Application number: 20203532.5
(22) Date of filing: 23.10.2020
(51) Int. Cl.: F01P 1/06, F02B 67/06, F16F 15/10, F16F 15/30, F16H 55/40

(54) **ENGINE DAMPER COOLING WITH PULLEY INTEGRATED FAN**

(30) Priority: 02.12.2019 US 201962942394 P
(71) Applicant: AGCO Corporation, Duluth, GA 30096 (US)
(72) Inventor: Peterson, Joshua, Hesston, Kansas 67062 (US)
(74) Representative: AGCO Intellectual Property Department

(57) **Abstract**

In one embodiment, an engine damper (20) and a pulley (18) adjacent the engine damper, the pulley comprising a hub portion (30) and an outer circumferential portion (28) joined to the hub portion by plural spaced apart vanes (32), wherein each space between adjacent vanes enables air flow to or from the engine damper.

## Description

### TECHNICAL FIELD

The present disclosure is generally related to engine damper and pulley assemblies, and, more particularly, operational temperature control involving such assemblies.

### BACKGROUND

An engine damper and pulley assembly is a common assembly seen at the front of an engine. The engine damper is operationally coupled to the pulley, and both are driven (and concurrently rotated, or rotated in some instances independently via a clutch mechanism) by the engine. The pulley is used to drive engine accessories and is typically mounted to the front of the engine damper. Engine dampers, including torsional vibration dampers, are used on many engines to reduce vibrations by converting energy to heat. Dampers often are constructed using an inertia ring in a viscous fluid (e.g., oils, grease, liquids with high silica content, etc., or an inertia ring cooperating with an elastomeric material), where torsional vibration (e.g., imposed by crankshaft forces) forces the fluid through narrow passages that dissipate the vibration as heat. This heat should be dissipated to keep the damper fluid (or elastomeric material) functioning properly. Typically, engines are mounted behind a cooling package that expends a considerable amount of heat, making it difficult to keep the engine damper cool. Efforts have focused on damper designs to alleviate high temperature effects, but sometimes conditions arise that present challenges in dissipating heat.

### SUMMARY OF THE INVENTION

In one embodiment, an engine damper and a pulley adjacent the engine damper, the pulley comprising a hub portion and an outer circumferential portion joined to the hub portion by plural spaced apart vanes, wherein each space between adjacent vanes enables air flow to or from the engine damper.

These and other aspects of the invention will be apparent from and elucidated with reference to the embodiment(s) described hereinafter.

### BRIEF DESCRIPTION OF THE DRAWINGS

Many aspects of an engine damper cooling system of the present disclosure can be better understood with reference to the following drawings. The components in the drawings are not necessarily to scale, emphasis instead being placed upon clearly illustrating the principles of an engine damper cooling system. Moreover, in the drawings, like reference numerals designate corresponding parts throughout the several views.
FIG. 1 is a schematic diagram that conceptually illustrates, in overhead plan, fragmentary view, an embodiment of an example engine damper cooling system.
FIG. 2 is a schematic diagram that illustrates, in isometric view, select components of an embodiment of an example engine damper cooling system.
FIG. 3 is a flow diagram that illustrates an embodiment of an example engine damper cooling method.

### DESCRIPTION OF EXAMPLE EMBODIMENTS

Certain embodiments of an engine damper cooling system, apparatus, and method (collectively referred to as an engine damper cooling system) are disclosed that help reduce an operating temperature at or around an engine damper, enabling the viscous fluid and/or elastomeric material of the engine damper to be maintained at acceptable operating temperatures. In one embodiment, the engine damper cooling system comprises a pulley operably coupled to an engine damper, the pulley comprising plural vanes to force more air to travel over and cool the engine damper.

Digressing briefly, current solutions for controlling the temperature of engine dampers focus on the design of the engine damper itself, which in of itself may not provide sufficient temperature control under some conditions (e.g., lower travel speed-induced air flow). Certain embodiments of an engine damper cooling system may be used, with or without the benefits of specialized damper designs, to provide a cooler environment within which the engine damper may operate.

Having summarized various features of certain embodiments of an engine damper cooling system of the present disclosure, reference will now be made in detail to the detailed description of an engine damper cooling system as illustrated in the drawings. While the disclosure is described in connection with these drawings, there is no intent to limit it to the embodiment or embodiments disclosed herein. Further, although the description identifies or describes specifics of one or more embodiments, such specifics are not necessarily part of every embodiment, nor are all various stated advantages associated with a single embodiment. On the contrary, the intent is to cover all alternatives, modifications and equivalents included within the scope of an engine damper cooling system as defined by the appended claims. Further, it should be appreciated in the context of the present disclosure that the claims are not necessarily limited to the particular embodiments set out in the description.

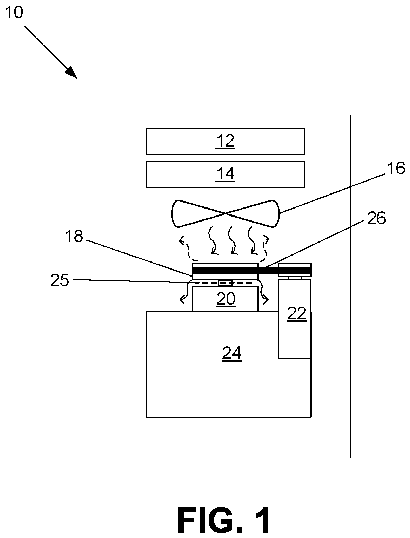

FIG. 1 is a schematic diagram that conceptually illustrates, in overhead plan, fragmentary view, an embodiment of an example engine damper cooling system 10. The engine damper cooling system 10 may be part of an engine assembly for a vehicle of any one of a plurality of different types and/or uses, including incorporation into a tractor (e.g., the MT800 from AGCO), passenger vehicle, commercial truck, mining or construction vehicle, among other types of vehicles using wheels, tracks, or a combination thereof, for any one of a plurality of different recreational or commercial uses. For purposes of illustration, the engine damper cooling system 10 is described in the context of an agricultural tractor that uses a high horsepower (e.g., over 400 horsepower) engine at a relatively low travel speed (compared to a vehicle normally used in a highway environment). In such applications, the lower travel speed often results in a lower volume of air flow, which may give rise to excessive heat exposure to an engine damper without the benefit of an engine damper cooling system 10. However, it is appreciated that even when used in vehicles having improved air-flow conditions, the engine damper cooling system 10 may provide a benefit in prolonging the life of the engine damper and/or enabling efficient engine damper operation, and hence such vehicles are contemplated to be within the scope of the engine damper cooling system 10.

In the depicted embodiment, the engine damper cooling system 10 comprises a condenser 12, a radiator 14, a (radiator) fan 16, a pulley 18, an engine damper 20, a compressor 22, and an engine 24. It should be appreciated that the schematic depicted in FIG. 1 is one example illustration, and shows a conceptual, fragmentary view that is used to facilitate an understanding of operations of the engine damper cooling system 10, and that one having ordinary skill in the art would understand that an engine and associated subsystems (e.g., cooling system, control electronics, heat exchangers, vacuum system, etc.) and/or components comprise a plurality of known components not shown, including a charge air cooler, oil cooler, fuel cooler, electrical wiring, tubing/hoses, valves, solenoids, refrigerant containers, accumulators, receiver dryers, among other known components.

The condenser 12 is a heat exchange element that converts high pressure, high temperature gas to a lower temperature liquid. The gas/liquid may include air conditioning refrigerant (e.g., HFC-134a, HFC-152a, newer climate friendly refrigerants, etc.). One or more hoses or tubing (not shown) enable closed loop fluid flow through the compressor 22, orifice tube/expansion valve, and an evaporator (not shown) to cool a cab or passenger compartment, the cooled fluid returned to the compressor 22 to convert to a high pressure, high temperature gas to repeat the refrigerant cycle in know fashion. The radiator 14 is another heat exchange element that generally resides adjacent and rearward of the condenser 12. The radiator 14, as is known, allows for the flow of engine coolant (e.g., routed through the engine via one or more hoses) that enables the transfer of engine heat (carried by the engine coolant) to the environment (at the radiator 14) and the resultant cooled engine coolant back to the engine. The fan 16 draws air through the condenser 12 and radiator 14 to facilitate cooling of the fluids flowing through the same.

In one embodiment, the pulley 18 is coupled to the outward (e.g., front) face of the engine damper 20, and is configured with an arrangement of vanes that facilitate the cooling of the engine damper 20. The engine damper 20 may comprise a torsional vibration damper constructed using an inertia ring in a viscous fluid or an inertia ring cooperating with an elastomeric material. Certain embodiments of an engine damper cooling system 10 cool the air at and/or around the engine damper 20, which maintains the viscous fluid and/or elastomeric material at an acceptable operating temperature (e.g., 120C, though not limited to this temperature specification) despite low travel speeds (and hence low air flow due to travel speeds). As explained further below, in one embodiment, the cooling effect arises from the use of plural, pitched vanes of the pulley 18 drawing cooled fan air through the spacings or openings located between the vanes and towards the engine damper 20, as represented by the air-flow arrows exiting the pulley 18. In some embodiments, the vanes of the pulley 18 may be pitched in an opposite manner, which facilitates the influence of air away from the engine damper 20 and through the openings created by the vanes, as represented by the dashed, air-flow arrows between the fan 16 and the pulley 18. As indicated above, certain embodiments of an engine damper cooling system 10 may be beneficial for other types of vehicles. The engine damper 20 is driven by the engine 24. The pulley 18 is in fore-and-aft arrangement with the engine damper 20. The pulley 18, via its operable connection to the engine damper 20, is likewise driven by the engine 24. In some embodiments, the engine damper 20 and pulley 18 rotate concurrently (e.g., when the engine damper 20 and pulley 18 are directly coupled to each other). In some embodiments, the pulley 18 may be coupled to the engine damper 20 via a clutch 27 (represented by a dashed line to signify its presence and use as optional), such that the engine damper 20 and pulley 18 do not rotate concurrently (e.g., rotation may be independent in some instances). Clutches may be used to reduce engine loads. The pulley 18 drives operations of the compressor 22 (which internally pressurizes the refrigerant) via operable connection to the engine damper 20 (and engine 24) using an endless, elastomeric belt 26 residing, in one embodiment, in a channel or groove (or in some embodiments, riding over a flat surface) created on the peripheral surface of the pulley 18 (or elsewhere) in known manner. Note that in some embodiments, a compressor may be used that is powered electrically (e.g., in hybrid engines via a battery, where the refrigerant is pressurized using a motor integral to the compressor). In such embodiments, the pulley 18,though adjacent the engine damper 20, may not be attached to the engine damper 20. In some embodiments, additional accessories may be driven (using a serpentine or other arrangement of belt or additional belts, such as carried in plural channels along the peripheral surface (or elsewhere) of the pulley 18. For instance, the pulley 18 may comprise a single-or multi-grooved configuration to drive additional accessories including a water pump, alternator, air compressor, and/or fan.

Variations to the above are contemplated for some embodiments. For instance, in some embodiments, the engine damper cooling system 10 comprises plural (e.g., two) fans (e.g., a separate fan for the condenser 12 instead of using the (radiator) fan 16, or an additional fan to help the fan 16 cool the refrigerant), which facilitates the flow of cooler air to the pulley 18 (e.g., represented by air-flow arrows entering the pulley 18). Further, in some embodiments, the engine damper cooling system 10 may comprise all or a subset of the components described in association with FIG. 1.

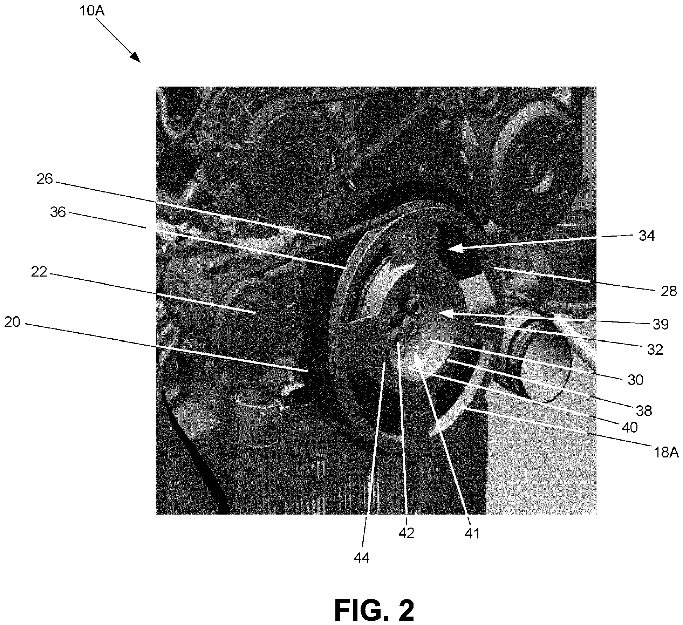

Referring now to FIG. 2, shown are select components of an embodiment of an engine damper cooling system 10A. In particular, the engine damper cooling system 10A comprises an embodiment of the pulley 18A and the engine damper 20. Emphasis, for purposes of explanation for FIG. 2, is on the pulley 18A. In one embodiment, the pulley 18A comprises a cast or molded material (e.g., cast metal). In some embodiments, the pulley 18A is a machined or fabricated component. In some embodiments, the pulley 18A is comprised of composites. The pulley 18A has a cylindrical geometry and comprises an outer periphery or outer circumferential portion 28, an inner hub portion 30, and plural vanes 32 that join the circumferential portion 28 to the hub portion 30. The plural vanes 32, which in one embodiment, each extend a width or depth (fore-and-aft) of the circumferential portion 28 (e.g., extend to and ending between the front and rear surfaces of outer circumferential portion 28), define plural openings or spaces 34 that enable the flow of air from the fan 16 (FIG. 1) to cool the air at and around the engine damper 20. In some embodiments, the vanes 32 may extend beyond the width or depth of the circumferential portion 28. The spaces 34 expose an outward face of the engine damper 20 to the flow of air, which helps to cool the engine damper 20 (and associated engine damper fluid and/or elastomeric material). In one embodiment, the pulley 18A comprises four (4) vanes 32 that are spaced (e.g., equidistantly or, in some embodiments, non-equidistantly) apart. In some embodiments, there may be fewer vanes 32 or additional vanes 32. In one embodiment, the quantity of vanes 32 may range between and including 3-12 vanes, with a pitch of anywhere from 25-75 degrees (inclusive) in some embodiments. Other variations may be used. In some embodiments, the vanes 32 may have a rhomboid shape that angle or flare out (e.g., in the annular direction) fore and aft. In some embodiments, the vanes 32 may have an airfoil shape, or in some embodiments, other geometries may be used to facilitate air flow across the engine damper 20. As noted with reference to FIG. 1, the vanes 32 may be pitched in one configuration to draw more cool air through the spaces 34 as explained above. In some embodiments, the vanes 32 may be pitched in an opposite manner to draw heat away from the engine damper 20 and through the spaces 34. The pulley 18A (e.g., the circumferential portion 28) comprises a peripheral surface 36 that defines a width, such as afore-and-aft depth (e.g., from one side, or front side, to another side, or backside) of the circumferential portion 28. The peripheral surface 36 may comprise a channel or groove that is of sufficient width/depth to accommodate and constrain a single belt 26, the single belt wrapped around the pulley 18A and a pulley portion of the compressor 22. In some embodiments, the width/depth may be sufficient to accommodate multiple grooves. In some embodiments, the peripheral surface 36 comprises a flat, fore and aft surface. In some embodiments, the pulley 18 may comprise a channel(s) or groove(s) behind (or in front of) the inner hub portion 30 (e.g., instead of about the peripheral surface 36).

The hub portion 30 comprises an outer face 38 that is, or is approximately, co-planar with the outer face of the circumferential portion 28, and which circumscribes one side (e.g., the forward facing or outward side) of the pulley 18. The hub portion 30 further comprises a well or bowl 39 that extends inwardly from the outer face 38. The well or bowl 39 comprises an annular sidewall 40 and an opening 41 that exposes plural bolts 42 arranged in an annular fashion and that are used to secure the engine damper 20 to the engine 24. The outer face 38 comprises an annular arrangement of plural bolt openings or apertures to enable insertion and coupling via bolts 44 to the engine damper 20.

Note that variations to the design of the pulley 18A are contemplated, including fewer bolt apertures, a well 39 of less depth, a smaller diameter hub portion 30, among other variations.

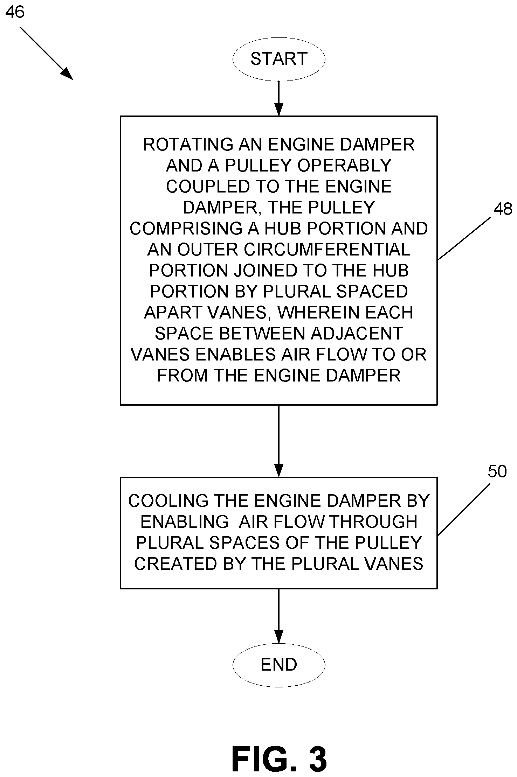

In view of the various embodiments of an engine damper cooling system (e.g., systems 10, 10A) described herein, it should be appreciated that one embodiment of an example damper engine cooling method, denoted as method 46, performed in one embodiment by an assembly comprising the pulley 18A and engine damper 20, and depicted in FIG. 3 between start and end steps, comprises rotating an engine damper and a pulley operably coupled to the engine damper, the pulley comprising a hub portion and an outer circumferential portion joined to the hub portion by plural spaced apart vanes, wherein each space between adjacent vanes enables air flow to or from the engine damper (48); and cooling the engine damper by enabling air flow through plural spaces of the pulley created by the plural vanes (50).

While certain embodiments of the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. Note that various combinations of the disclosed embodiments may be used, and hence reference to an embodiment or one embodiment is not meant to exclude features from that embodiment from use with features from other embodiments. In the claims, the word "comprising" does not exclude other elements or steps, and the indefinite article "a" or "an" does not exclude a plurality. Any reference signs in the claims should be not construed as limiting the scope.

## Claims

1. A pulley (18), comprising:
a hub portion (30); and
an outer circumferential portion (28) joined to the hub portion by plural spaced apart vanes (32), wherein each space between adjacent vanes extends a width of the pulley.

2. The pulley of the preceding claim, wherein the pulley comprises a cast material.

3. The pulley of any one of the preceding claims, wherein the hub comprises plural, spaced-apart apertures configured to receive bolts.

4. The pulley of any one of the preceding claims, wherein the outer circumferential portion is joined to the hub by anywhere from three to twelve spaced apart vanes.

5. The pulley of any one of the preceding claims, wherein each of the vanes comprises an angle between a first side and a second side of the pulley of anywhere from approximately twenty-five degrees to seventy-five degrees.

6. The pulley of any one of the preceding claims, wherein a peripheral surface of the outer circumferential portion is configured to receive one or more endless belts (26).

7. The pulley of any one of the preceding claims, wherein a groove located adjacent to, and in front of or rearward of, the hub portion is configured to receive one or more endless belts.

8. A system (10) comprising the pulley of any one of the preceding claims, comprising an engine damper (20), wherein each space between adjacent vanes enables air flow to or from the engine damper.

9. The system of the preceding claim, wherein the pulley is operably coupled to the engine damper directly or via a clutch mechanism (27).

10. The system of any one of the preceding claims, further comprising an engine accessory (22) and an endless belt (26) arranged around the pulley and the engine accessory.

11. The system of any one of the preceding claims, further comprising plural engine accessories and one or more endless belts arranged around the pulley and the one or more engine accessories.

12. The system of any one of the preceding claims, further comprising one or more fans (16), wherein air flow from the one or more fans flows through the spaces created by the plural vanes.

13. A method (46) performed by the system of any one of the preceding claims.
